# EUROPEAN PATENT APPLICATION

(11) **EP 3 064 788 A1**
(43) Date of publication of application: **07.09.2016**
(21) Application number: 16152607.4
(22) Date of filing: 25.01.2016
(51) Int. Cl.: F16B 47/00

(54) **SUCTION PLATE**

(30) Priority: 05.03.2015 KR 20150030928; 20.10.2015 KR 20150145865
(71) Applicant: CPC Co., Ltd., Gyeonggi-do (KR)
(72) Inventor: SONG, Soon Young, Gyeonggi-do (KR)
(74) Representative: Schlief, Thomas P.

(57) **Abstract**

Disclosed is a suction plate, and more particularly to a suction plate, in which a pad (10) to which a suction band (30) is attached along an outer bottom surface is pressed down by external force while contacting a target surface (s) and then restored upward when released from the external force, so that a vacuum can be created between a center portion (11) of the pad and the target surface since the outer portion of the pad is firmly attached to the target surface by the suction band and the center portion having no suction band tends to move upward by the restoring force when a user presses the pad against the target surface and releases the pad, thereby strongly attaching the pad to the target surface.

## Description

### BACKGROUND OF THE INVENTION

### (a) Field of the Invention

The present invention relates to a suction plate for a support, and more particularly to a suction plate for a support, in which a pad to which a suction band is attached more particularly to a suction plate, in which a pad to which a suction band is attached along an outer bottom surface is pressed down by external force while contacting a target surface and then restored upward when released from the external force, so that a vacuum can be created between a center portion of the pad and the target surface since the outer portion of the pad is firmly attached to the target surface by the suction band and the center portion having no suction band tends to move upward by the restoring force when a user presses the pad against the target surface and releases the pad, thereby strongly attaching the pad to the target surface.

### (b) Description of the Related Art

Currently, various supports for mounting a navigator, a small computer, a cup holder, a mobile-phone and the like convenience goods have been employed in a vehicle. Further, various supports have been used for hanging a variety of household necessaries such as a towel and the like thereon.

Such a support employs a suction plate based on a principle of a sucker to couple articles without damaging the exterior of the vehicle, an indoor wall of a building, etc. To readily attach the suction plate to glass or a body, a center portion of the suction plate is pulled by an actuation lever.

For example, the suction plate for the support typically used in the vehicle is not attached to the vehicle when the center portion of the suction plate is not pulled by the actuation lever. If the actuation lever is not pulled, the navigator, an LCD, and other convenience goods cannot be mounted to the vehicle. This is because the suction plate is made of transparent rubber or plastic and attached to the glass or the vehicle body by only compressed force generated by the actuation lever.

Like this, a conventional support is structured to employ the actuation lever to attach the suction plate to the glass or the like, and therefore has problems of complicating the overall structure and requiring costs, time and endeavor in manufacture.

Further, it is inconvenient for a user since the actuation level has to be pulled to attach the support to the glass or the like.

### SUMMARY OF THE INVENTION

Accordingly, the present invention is conceived to solve the foregoing problems, and an aspect of the present invention is to provide a suction plate, in which a pad to which a suction band is attached along an outer bottom surface is pressed down by external force while contacting a target surface and then restored upward when released from the external force, so that a vacuum can be created between a center portion of the pad and the target surface since the outer portion of the pad is firmly attached to the target surface by the suction band and the center portion having no suction band tends to move upward by the restoring force when a user presses the pad against the target surface and releases the pad, thereby strongly attaching the pad to the target surface.

Another aspect of the present invention is to provide a suction plate, in which a suction band attached to an outer bottom surface of a pad comprises a flat lower surface or a slant lower surface, and the outer bottom surface of the suction band includes a protrusion protruding downward, so that the suction band keeps as little contact with the target surface s as possible in the state that the pad is put on a target surface, thereby easily expelling air from a space between the pad and the target surface at a moment when the pad is pressed down by external force and thus creating a vacuum between the center portion of the pad and the target surface.

Still another aspect of the present invention is to provide a suction plate, which is convenient for a user since a pad is naturally restored upward to create a vacuum in between the pad and a target surface when the pad is pressed against the target surface and then released from the pressure.

In accordance with an embodiment of the present invention, there is provided a suction plate including: a pad comprising a center portion, and an extended portion integrally connected to and extended outward from a lateral end of the center portion; a connector vertically formed on a top of the center portion; and an adhesive suction band attached to a bottom of the extended portion of the pad, wherein if the pad is pressed down by external force while contacting the target surface and then released from the external force, the pad is restored upward.

At least one of a top and a bottom of the extended portion of the pad is formed with a cutting groove for restoring the pad.

The suction band comprises a flat lower surface or a slant lower surface in a state that an upper surface of the suction band is attached to the extended portion of the pad.

### BRIEF DESCRIPTION OF THE DRAWINGS

The above and/or other aspects of the present invention will become apparent and more readily appreciated from the following description of the exemplary embodiments, taken in conjunction with the accompanying drawings, in which:
- **FIG. 1**: is a longitudinal section view of a suction plate having various shapes according to an embodiment of the present invention;
- **FIG. 2**: is a perspective view of a suction plate according to an embodiment of the present invention;
- **FIG. 3**: is a bottom view of the suction plate;
- **FIG. 4**: is a cut-open view of the suction plate; and
- **FIG. 5**: is a cross-section view of the suction plate.

### DETAILED DESCRIPTION OF THE EMBODIMENTS

Regarding the foregoing problems, solutions and effects, exemplary embodiments of a suction plate according to an embodiment of the present invention will be described below in detail with reference to the accompanying drawings.

For clarity and convenience of description, the size, shape, etc. of the elements may be exaggerated in the drawings. Further, terms specially defined in consideration of the structure and function of the elements may be varied depending on intention or custom of a user and operator. The definition of such terms has to be based on descriptions throughout the present specification.

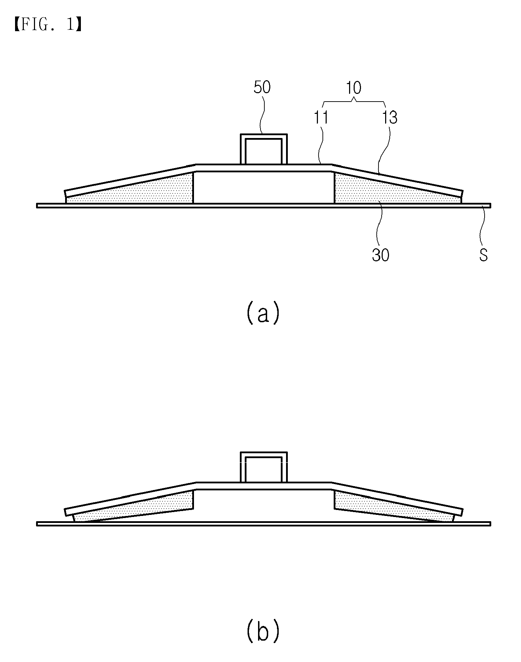

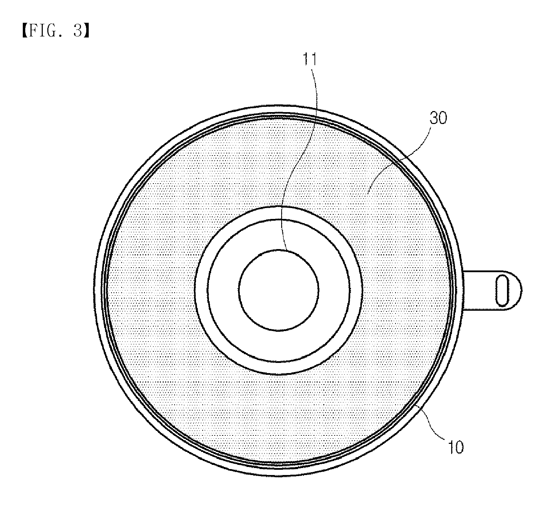

As shown in FIG. 1 to FIG. 4, the suction plate according to an embodiment of the present invention includes a pad 10, a suction band 30 attached to an outer bottom surface of the pad 10, and a connector 50 vertically formed on a top end of the pad 10.

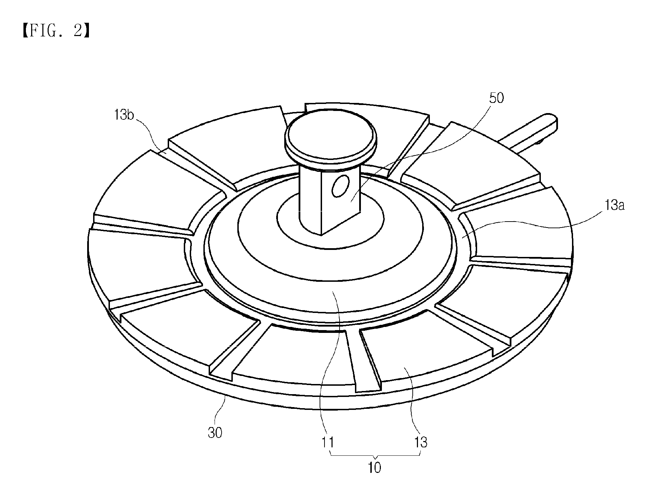

The pad 10 is generally shaped like a disc, of which a middle part (a center portion 11) is flat (see FIG. 1) or upwardly elevated (see FIG. 2 to 4), and the rest part except the middle part, i.e. an outer part (extended portion 13) is sloped (see FIG. 1) or horizontal (see FIG. 2 to FIG. 4).

Specifically, the pad 10 includes a center portion 11 corresponding to the middle part, and an extended portion 13 integrally connected to a lateral end of the center portion 11 as a single body and extended outward.

The center portion 11 is formed at the center of the pad 10, and may be flat as shown in FIG. 1 or upwardly elevated as shown in FIG. 2 to FIG. 4.

The center portion 11 generally has a disc shape if it is flat, or has a hemispherical shape if it is upwardly elevated. With this shape, the extended portion 13 is integrally connected to an end (arc), i.e. the lateral end of the center portion 11.

The lateral end of the center portion 11 and the extended portion 13 are formed as a single body. That is, the extended portion 13 is formed integrally with the lateral end of the center portion 11, and is horizontal or sloped along an outward direction. The extended portion 13 may be extended from the lateral end of the center portion 11 slantly as shown in FIG. 1 or horizontally as shown in FIG. 2 to FIG. 4.

Since the pad 10 having the center portion 11 and the extended portion 13 is formed using a mold or the like at once, the center portion 11 and the extended portion 13 are made of one material and formed as a single body.

Although the pad 10 is basically hard, it may be made of an elastic material having resilience in up and down directions or may have a resilient structure.

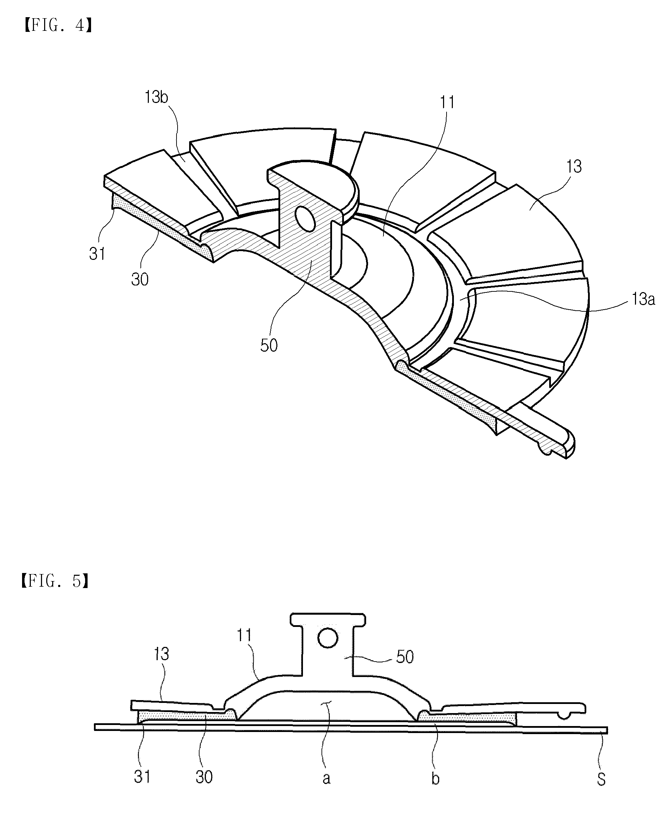

Specifically, the pad 10 is formed to be restored in an upward direction if the pad 10 contacting a target surface (refer to "s" in FIGs. 1 and 5) is urged downward by external force and then released from the external force. That is, the pad 10 is formed to have a structure where the middle part tends to move upward, i.e. the middle part is restored upward when a user presses the pad 10 down and then releases it.

As described above, if the suction plate is pressed against the target surface s and then released, the middle part is lifted upward since the pad 10 is formed to be restored upward. Therefore, a vacuum space is formed in between the middle part of the suction plate, i.e. the center portion 11 and the target surface s. This will be described again.

On the top of the foregoing pad, particularly on the top of the center portion 11 in the pad 10, a connector 50 is formed. In other words, the connector 50 is vertically formed on the top of the center portion 1.

The connector 50 vertically formed at an upper center of the center portion 11 in the pad 10 will be served as a part to which a body of various kinds of supports is coupled. Therefore, the connector 50 may have various structures and shapes corresponding to the shapes of the bodies of the supports. For example, if the support is a vehicle support for supporting a smart phone, the connector 50 may have a coupling structure to which a cradle of the vehicle support is coupled.

By the way, a suction band 30 is attached to the bottom of the pad 10 so that the suction plate can be strongly attached to the target surface s. Specifically, the suction band 30 is an adhesive suction band to be attached to the bottom of the extended portion 13 of the pad 10.

As described above, air has to be prevented from being introduced in between the pad 10 and the target surface s such as glass or the like in order to keep a vacuum state between the pad 10 and the target surface s even when the center part of the pad 10, i.e. The center portion 11 is restored upward.

To this end, the suction band 30 is provided on the bottom of the pad 10 and made of a bond-gel material so as to be strongly attached to the target surface and prevent external air from introduction.

The suction band 30 may be formed by directly applying an adhesive soft material to only the rest part except the center part of the pad 10, i.e. except the center portion 11, that is, to the bottom of the extended portion 13, or by attaching a formed adhesive soft product to only the rest part (i.e. The extended portion) except the middle part (i.e. The center portion) of the pad. Specifically, the suction band 30 is attached to the bottom of the pad 10 in the form of a circle band to the rest part except the center portion 11 of the pad 10, i.e. the bottom of the extended portion 13.

As described above, the suction plate includes the pad 10 having the center portion 11 and the extended portion 13, the connector 50 formed on the top of the center portion, and the suction band 30 attached to the bottom of the extended portion 13, in which the pad 10 has a structure to be restored upward if it is pressed against the target surface s by external force and then released from the external force.

Thus, the pad 10 has the center portion 11 at the center thereof to be restored upward, and the suction band 30 is attached to only the bottom of the extended portion 13. Further, the pad 10 is pushed down by external force and restored upward when it is released from the external force. Here, the pad 10 is made of a flexible material that can be bent by external force.

Since the suction band 30 is attached to the bottom of only the extended portion 13 and the pad 10 is bent by external force, the center portion 11 of the pad is pushed down by the external force when the suction plate according to the present invention is pressed against the target surface s by the external force, and is restored upward when it is released from the external force.

If the pad 10 is relatively hard, not only it is difficult to push the pad 10 down by external force, but also it is difficult to restore the pad 10 upward since elasticity is insufficient.

According to the present invention, the pad 10 may have cutting grooves on either of the top or the bottom of the extended portion 13 or both the top and the bottom of the extended portion 13 so that the pad 10 can be not only pushed down but also restored upward. That is, the cutting grooves 13a and 13b for restoring the pad 10 are formed on at least one of the top and bottom of the extended portion 13.

Since the suction band 30 is attached to the bottom of the extended portion 13, the cutting groove may be formed on the top of the extended portion 13 of the pad 10. However, the cutting grooves may be formed on the bottom of the extended portion 13 of the pad 10 so as not to be exposed to the outside in consideration of outer appearance as long as the cutting grooves do not interfere with the suction band 30. Of course, the cutting grooves may be formed on both the top and the bottom of the extended portion as necessary.

The cutting grooves may be formed to have various structures at various positions. However, the cutting grooves may necessarily include a circular cutting groove 13a formed in the extended portion along the lateral end (i.e. an arc edge) of the center portion 11. The circular cutting groove 13a is formed on either of the top or the bottom or both the top and the bottom of the extended portion 13.

Since the circular cutting groove 13a is formed in a border between the center portion 11 where the suction band is not attached and the extended portion 13 where the suction band is attached, the pad 10 can be pushed down by external force and restored upward when it is released from the external force even though the pad 10 is made of a relatively hard material.

By the way, the cutting grooves may further include linear cutting grooves 13b having various shapes at various positions in addition to the circular cutting groove 13a. The linear cutting grooves 13b may be formed to have various shapes at various positions as long as they not only give elasticity of up and down directions to the relatively hard pad 10 but also restore the center portion of the pad upward when it is released from downward external force.

In FIG. 2 and FIG. 4, the linear cutting grooves 13b are perpendicular to the circular cutting groove 13a. The linear cutting groove is not parallel with but perpendicular to the circular cutting groove so as to prevent the extended portion 13 of the pad from being easily deformed. That is, if the linear cutting grooves are formed in a direction of touching an arc edge of the circular cutting groove, i.e. in a tangential direction, the extended portion 13 of the pad 10 is likely to be deformed in up and down directions and is hardly restored. Accordingly, the linear cutting grooves are perpendicular to the circular cutting groove.

With this structure, the pad 10 tends to move upward when it is released from the downward external force. Therefore, a vacuum space is formed in between the center portion 11 of the pad and the target surface s.

To vacuumize a space between the center portion 11 of the pad and the target surface s, not only air between the pad 10 and the target surface s has to be expelled while the pad 10 is pressed down by external force but also external air is prevented from being introduced into the space between the pad 10 and the target surface s while the pad 10 is restored upward.

To this end, in the state that an upper surface of the suction band 30 is attached to the extended portion 13 of the pad 10, a lower surface of the suction band 30 is maintained horizontally as shown in (a) of FIG. 1 (in parallel with the target surface s before being pressed) or maintained slantly as shown in (b) of FIG. 1 (at a slant to the target surface s before being pressed).

As described above, the lower surface of the suction band 30 may be formed horizontally or slantly before being attached to the target surface s.

In the state that the suction band 30 is attached to the bottom of the extended portion 13 so that the lower surface of the suction band 30 can slant as shown in (b) of FIG. 1, if the suction plate is put on the target surface s as shown in FIG. 5, only the outermost portion of the suction band 30 contacts the target surface s.

In this state, if a user presses the suction plate against the target surface s, the air in between the pad 10 and the target surface s is expelled through a fine gap between the suction band 30 and the target surface s.

Then, a user further presses the extended portion 13 attached with the suction band 30 so that the suction band 30 can be more strongly attached to the target surface s. If the pad 10 in this state is released from the external force, the pad 10 is restored upward. During this process, the space in between the center portion 11 and the target surface s is vacuumized. In result, the suction plate is strongly coupled to the target surface.

By the way, in the state that the suction plate is put on the target surface, if a contact portion of the suction band 30 with the target surface s increases, air between the pad and the target surface is hardly expelled while the pad is pressed down by external force.

In brief, in the state that the suction plate is put on the target surface, the it is preferable to keep the minimum contact portion between the suction band 30 and the target surface s. Therefore, the suction band 30 according to the present invention includes a ring-shaped protrusion 31 on the bottom thereof. As shown in (b) of FIG. 1, if the bottom of the suction band is slantly formed, the ring-shaped protrusion 31 may be formed on an outermost lower surface that first contacts the target surface.

On the other hand, in the state that the suction band 30 is attached to the bottom of the extended portion 13 so that the lower surface of the suction band 30 is flat as shown in (a) of FIG. 1, if the suction plate is put on the target surface s, all the surface of the suction band 30 wholly contacts the target surface s.

In this state, if a user presses the suction plate against the target surface s, the air in between the pad 10 and the target surface s is expelled through a fine gap between the suction band 30 and the target surface s.

Then, a user further presses the extended portion 13 attached with the suction band 30 so that the suction band 30 can be more strongly attached to the target surface s. If the pad 10 in this state is released from the external force, the pad 10 is restored upward. During this process, the space in between the center portion 11 and the target surface s is vacuumized. In result, the suction plate is strongly coupled to the target surface.

By the way, in the state that the lower surface of the suction band is flat, air in between the pad and the target surface is hardly expelled while the suction plate is pressed down by external force since the suction band 30 has much contact portion with the target surface s when the suction plate is put on the target surface s.

Therefore, in this case, more ring-shaped protrusions are required on the lower surface of the suction band. The ring-shaped protrusion may be formed on the flat lower surface of the suction band. However, to minimize an uplift of the suction band (separation from the target surface) after the suction band is pressed against and attached to the target surface, the ring-shaped protrusion is formed on the outermost lower surface of the suction band as shown in FIG. 5.

The suction band 30 has a slant lower surface as shown in (b) of FIG. 1, but its gradient is small. Therefore, the contact portion of the suction band with the target surface is likely to increase in the state that the suction plate is put on the target surface. Further, if the lower surface is flat as shown in (a) of FIG. 1, the contact portion is very large.

Accordingly, as shown in FIG. 4 and FIG. 5, the protrusion 31 is formed along the outermost edge of the suction band 30. Thus, when the suction plate is put on the target surface, the contact portion with the target surface corresponds to only the protrusion 31 of the suction band 30. In other words, it is possible to minimize the contact portion of the suction band with the target surface.

FIG. 5 illustrates that the suction band 30 with the protrusion 31 is put on the target surface s. This state shows that the suction plate is in contact with the target surface but no external force is applied thereto.

In this state, only the lower end of the protrusion 31 is in contact with the target surface s, and air between the pad 10 and the target surface s includes air in "an airtight space a between the center portion and the target surface" corresponding to a space between the center portion 11 of the pad 10 and the target surface s, and air in "an airtight space b between the extended portion and the target surface" corresponding to a space between the suction band 30 attached to the extended portion 13 of the pad 10 and the target surface s.

In this state, if a user presses the pad, the air in the airtight space a between the center portion and the target surface and the air in the airtight space b between the extended portion and the target surface are expelled to the outside through a gap between the protrusion 31 and the target surface s. In the state that the suction plate is put on the target surface, a fine gap is unavoidably formed between the lower end of the protrusion 31 and the target surface s.

As described above, when the pad 10 is pressed, most of air in between the pad and the target surface is expelled to the outside. While the pad is pressed, the suction band 30 is firmly attached to the target surface s. To strengthen the attachment between the suction band and the target surface, a user may additionally press the extended portion attached with the suction band.

Through the foregoing process, most of air in between the pad 10 and the target surface s is expelled to the outside, and thus the suction band 30 is strongly attached to the target surface s. In this state, if a user releases the pad from the external force, i.e. does not press the pad, the center portion of the pad 10 tends to move upward by restoration.

Since the extended portion 13 is formed with the circular cutting groove 13a, the center portion 11 may be pressed down by external force and restored upward when it is released from the external force.

Thus, if the center portion of the pad 10 is restored upward, the airtight space a in between the center portion and the target surface corresponding to a space in between the center portion 11 of the pad and the target surface s is vacuumized.

In the suction plate according to the present invention, coupling between the suction plate and the target surface is improved by the vacuum space the pad and the target surface as well as attachment based on the suction band to the target surface. Therefore, the support using the suction plate according to the present invention is stably attached to the glass or the like.

By the way, the pad 10 and the connector 50 according to the present invention may be separately manufactured and then connected to each other. However, it is preferable that the pad and the connector may be formed as a single body through a mold or the like. That is, the pad 10 and the connector 50. Thus, the suction plate according to the present invention is advantageous to lower manufacturing costs since the pad 10 and the connector 50 are formed as a single body at once without any separate assembling process.

Further, the pad 10 and the connector 50 according to the present invention may be made of various materials. For example, the pad and the connector may be made of either of a thermosetting or thermoplastic material such as acrylonitrile-butadiene-styrene (ABS), polycarbonate (PC), polyethylene (PE), polypropylene (PP), polyvinylchloride (PVC), urethane or the like.

Although a few exemplary embodiments of the present invention have been shown and described, it will be appreciated by those skilled in the art that changes may be made in these embodiments without departing from the principles and spirit of the invention, the scope of which is defined in the appended claims and their equivalents.

## Claims

1. A suction plate comprising: a pad comprising a center portion, and an extended portion integrally connected to and extended outward from a lateral end of the center portion; a connector vertically formed on a top of the center portion; and an adhesive suction band attached to a bottom of the extended portion of the pad,
wherein if the pad is pressed down by external force while contacting the target surface and then released from the external force, the pad is restored upward.

2. The suction plate according to claim 1, wherein at least one of a top and a bottom of the extended portion of the pad is formed with a cutting groove for restoring the pad.

3. The suction plate according to claim 1, wherein the suction band comprises a flat lower surface or a slant lower surface in a state that an upper surface of the suction band is attached to the extended portion of the pad.
